# FASCICULE DE BREVET EUROPEEN

(11) **EP 0 628 928 B1**
(45) Date de publication et mention de la délivrance du brevet: **14.05.1997**
(21) Numéro de dépôt: 94401221.0
(22) Date de dépôt: 02.06.1994
(51) Int. Cl.: G07B 15/00, G07F 7/08, G08G 1/123, G06K 19/07

(54) **Installation de paiement pour réseau de transport**
Bezahlvorrichtung für öffentliches Verkehrsnetz
Payment device for public transport network

(30) Priorité: 04.06.1993 FR 9306726
(43) Date de publication de la demande: 14.12.1994
(73) Titulaire: Decaux, Jean-Claude, F-92200 Neuilly sur Seine (FR)
(72) Inventeur: Lewiner, Jacques, F-92210 Saint-Cloud (FR); Carreel, Eric, F-75015 Paris (FR)
(74) Mandataire: Burbaud, Eric

(56) Documents cités:
- EP-A- 0 057 602
- EP-A- 0 330 071
- EP-A- 0 380 377
- EP-A- 0 538 514
- FR-A- 2 624 677
- FR-A- 2 664 075
- FR-A- 2 674 975
- GB-A- 2 191 029

## Description

L'invention est relative aux installations destinées à faire acquitter par les usagers des réseaux de transport les sommes correspondant aux déplacements effectués par ces usagers à bord de véhicules circulant sur lesdits réseaux.

Elle vise plus particulièrement, parmi ces installations, celles qui comprennent :
- d'une part, des tickets de transport mis à la disposition des usagers moyennant paiement, chacun de ces tickets comprenant des moyens pour enregistrer sur lui une donnée de validité quantifiable ou équivalente (somme d'argent, nombre de sections autorisé, date de fin de validité...) correspondant au paiement effectué, et des moyens rendant possibles, en réponse à des signaux transmis à distance, des réductions successives de la donnée de validité, si elle est quantifiable, jusqu'à son annulation, ou des consultations de ladite donnée,
- et, d'autre part, au moins un composteur disposé à proximité d'un passage livrant accès au réseau, composteur comprenant des moyens capables, en réponse à la présentation, par un usager, d'un desdits tickets destiné à autoriser un parcours donné sur le réseau, de contrôler à distance l'état de la validité dudit ticket et de soustraire à distance de la donnée de validité enregistrée dans ce ticket, si elle est quantifiable, une quantité correspondant au parcours considéré.

Ces installations sont intéressantes en ce qu'elles rendent très simples les accès des usagers au réseau : en effet il n'est plus nécessaire pour lesdits usagers de remettre concrètement des espèces à un préposé du réseau lors desdits accès, remises qui nécessitent le plus souvent des échanges avec retour de monnaie, particulièrement longs et fastidieux.

Mais avec les installations connues du genre en question, l'annulation du montant enregistré sur chaque ticket se traduit par la neutralisation définitive de ce ticket, lequel ne peut plus servir à rien.

GB-A-2 191 029 décrit une installation selon le préambule de la revendication 1.

Pour être à nouveau autorisé à emprunter le réseau, l'usager est alors obligé d'acquérir un nouveau ticket moyennant un nouveau paiement en se rendant à cet effet à un guichet approprié.

L'invention permet d'écarter cet inconvénient en rendant possible une recharge de validation du ticket (en argent, en durée de validité...) en tout lieu désirable, sans qu'il soit nécessaire à l'usager de se présenter à un poste de recharge.

A cet effet, l'installation de paiement du genre en question selon l'invention est essentiellement caractérisée en ce qu'elle comprend en outre :
- sur chaque ticket, des moyens codés d'identification de ce ticket et des moyens codés se prêtant à une recharge de validation à distance dudit ticket en réponse à la réception de signaux électromagnétiques appropriés,
- et en un poste central, des moyens propres à émettre vers les tickets à recharger des signaux électromagnétiques élaborés de façon telle qu'ils soient automatiquement sélectionnables par ces tickets et susceptibles d'effectuer à distance les recharges de validation desdits tickets.

Bien entendu, les signaux en question sont émis en réponse au versement de sommes appropriées, par l'usager détenteur du ticket à recharger, à l'entreprise qui gère l'installation.

Un tel complément d'installation pourrait être considéré dans certains cas comme relativement compliqué et onéreux s'il était prévu exclusivement aux fins de recharge de tickets ci-dessus décrites.

C'est ici qu'intervient un perfectionnement particulièrement intéressant de l'invention.

Ce perfectionnement réside dans la combinaison de l'idée générale ci-dessus décrite, appliquée à un réseau d'autobus, avec l'idée de mettre à la disposition des usagers de ce réseau des boîtiers portatifs récepteurs de signaux électromagnétiques appropriés, agencés de façon à renseigner ces usagers sur les temps d'attente des autobus à emprunter.

En effet, les installations de renseignement équipées de tels boîtiers comprennent déjà :
- un poste central agencé de façon à élaborer et à émettre vers les boîtiers des signaux électromagnétiques d'exploitation,
- et, dans chaque boîtier, des circuits récepteurs propres à identifier et à exploiter certains de ces signaux.

La combinaison ci-dessus indiquée, constituant le perfectionnement préféré de l'invention, revient alors purement et simplement à utiliser comme tickets de l'installation initialement décrite les boîtiers récepteurs portatifs de l'installation dernièrement évoquée.

Selon une variante de l'invention, l'installation ici considérée est appliquée aux péages d'un réseau d'autoroutes.

L'invention vise non seulement dans leur généralité les installations du genre en question, mais également les tickets rechargeables ci-dessus, et plus particulièrement les boîtiers récepteurs portatifs qui en tiennent lieu dans le mode de réalisation préféré.

Elle comprend, mises à part les dispositions principales explicitées ci-dessus, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

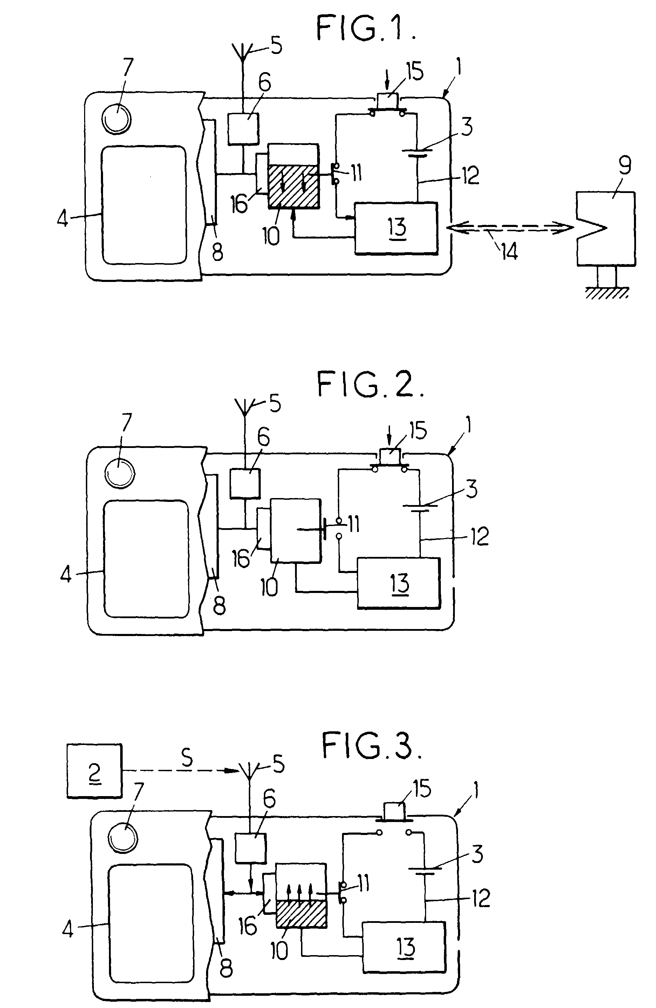

Les figures 1, 2 et 3 de ce dessin montrent schématiquement un boîtier récepteur portatif conforme au mode de réalisation préféré de l'invention, ledit boîtier étant représenté respectivement lors de son fonctionnement normal de "compostage", lors d'un refus de fonctionnement pour cause de décharge, et lors d'une recharge à distance.

Dans le mode de réalisation préféré considéré, on se propose d'informer les usagers des autobus d'un réseau urbain qui désirent monter dans un tel autobus à un arrêt ou station donné d'une ligne donnée dudit réseau, sur les temps d'attente réels des "prochains autobus" attendus à ladite station.

A cet effet, on prévoit des boîtiers portatifs 1 mis à la disposition des usagers et propres à coopérer avec un poste central 2 (figure 3) conçu de façon à élaborer et à émettre cycliquement par voie électromagnétique des signaux d'information S sur les positions instantanées réelles respectives des autobus du réseau, lesdits boîtiers comportant chacun une source de courant électrique 3, des moyens d'interrogation actionnables par les usagers, propres à identifier chaque station de "montée" désirée, des moyens propres à recevoir les signaux ci-dessus et à sélectionner ceux, de ces signaux qui concernent au moins le "prochain autobus" attendu à la station identifiée, des moyens propres à élaborer des informations liées aux temps d'attente de ce prochain autobus à ladite station et des moyens, comprenant un écran vidéo 4, propres à afficher ces informations.

Les moyens d'interrogation, de réception, de sélection et d'élaboration ci-dessus comprennent en particulier une antenne réceptrice 5, un circuit 6 d'amplification, démodulation et décodage associé à cette antenne, des touches de commande 7 et des moyens de mémoire et de calcul 8 particulièrement légers et peu encombrants, notamment du type des microprocesseurs.

Le boîtier portatif 1 ainsi décrit est lui-même utilisé comme titre de transport ou "ticket" permettant l'accès aux autobus du réseau par sa présentation à proximité d'un composteur de contrôle 9.

D'une façon connue en soi, le contrôle en question met en oeuvre les deux opérations suivantes :
- vérification de l'état valide ou non du ticket,
- libération d'un passage donnant accès au véhicule désiré.

La vérification de l'état de validité du ticket est basée sur l'un des deux principes suivants :
- cet état est défini par une date F de fin d'abonnement enregistrée sur le ticket et dans ce cas il suffit de vérifier que la date du compostage est antérieure à la date F,
- l'état de validité du ticket est défini par une donnée quantifiable enregistrée ou "chargée" dans le ticket, donnée représentant par exemple un "crédit" ou somme d'argent, ou un nombre de sections de trajet d'autobus autorisées : dans ce cas, le compostage se traduit automatiquement par une réduction de ladite donnée quantifiable d'une quantité qui peut être liée ou non à la longueur du trajet que l'usager désire parcourir à bord du véhicule considéré.

Sur les dessins, on a schématisé par le carré 10 un circuit sensible à l'état de validité du ticket : le degré de validité de celui-ci est symbolisé par la surface hachurée dudit carré et les petites flèches qui sont ancrées dans cette surface montrent dans quel sens évolue le degré en question.

En d'autres termes, ce degré décroît dans le cas de la figure 1, est nul dans celui de la figure 2 et croît dans celui de la figure 3.

On a supposé en outre, pour la clarté de l'exposé, que le circuit 10 est associé à un interrupteur électrique 11 monté dans le circuit d'excitation 12 d'un émetteur récepteur 13 propre à coopérer à distance avec le composteur 9, de préférence par liaison hertzienne, infra-rouge ou acoustique.

Les signaux échangés entre les deux ensembles 9 et 13 sont schématisés par les flèches 14 sur la figure 1.

On voit en outre sur cette figure 1 :
- que le circuit 10 est relié, d'une part, à la sortie du circuit 6 par l'intermédiaire d'un circuit 16 d'identification du boîtier et, d'autre part, à l'émetteur récepteur 13,
- et que l'excitation du circuit 12 est sous le contrôle d'un bouton poussoir 15 faisant saillie à l'extérieur du boîtier et actionnable par l'usager, ce qui peut être utile pour économiser la source 3.

La mise en oeuvre du boîtier 1 ainsi décrit est la suivante.

Tant que le boîtier est valide, ce qui correspond à un état non déchargé du circuit 10, l'interrupteur 11 est fermé.

Il suffit alors d'approcher le boîtier du composteur 9 -et éventuellement d'appuyer sur le bouton-poussoir 15, si un tel bouton est prévu- pour que soient exécutées les opérations de compostage habituelles ci-dessus définies, comme schématisé par les flèches 14 sur la figure 1.

Dès que la validité du boîtier 1 est annulée, par décharge complète de son circuit 10, ou encore par dépassement d'une date de fin d'abonnement enregistrée dans une mémoire appropriée du boîtier, l'interrupteur 11 s'ouvre (figure 2) et il n'est plus possible d'exciter l'émetteur-récepteur 13 : le boîtier devient inopérant.

Il est alors possible de le réactiver à distance ou de le "réabonner" à l'aide de signaux électromagnétiques S élaborés à partir du poste central 2 (figure 3) moyennant le paiement préalable, par l'usager du boîtier, de la somme correspondant au nouvel abonnement souscrit.

Ce réabonnement n'est effectué qu'après une identification correcte du boîtier par une partie des signaux S, mettant en oeuvre une comparaison avec un symbole d'identification codé enregistré dans le circuit 16.

Il peut être concrétisé par recharge proprement dite d'une donnée quantifiable telle que définie ci-dessus dans le circuit ou réserve 10.

Il peut l'être également par remplacement d'une date de fin d'abonnement périmée par une nouvelle date de fin d'abonnement postérieure à l'instant où s'effectue ledit remplacement.

Quel que soit le mode de réactivation adopté, le boîtier est alors à nouveau adapté aux paiements individuels et successifs des futurs trajets d'autobus à effectuer par l'usager détenteur du boîtier, et ce jusqu'à expiration du nouvel abonnement considéré.

En suite de quoi, et quel que soit le mode de réalisation adopté, on dispose finalement d'une installation d'information des usagers d'un réseau de transport en commun, installation dont la constitution et le fonctionnement résultent suffisamment de ce qui précède.

Cette installation présente sur celles actuellement connues l'avantage de rendre possible à distance une revalidation des tickets portés par ses usagers, sans aucune intervention directe des usagers autre que les paiements des nouvelles périodes d'abonnement, paiements qui peuvent être automatisés de toute façon désirable.

En outre, dans les modes de réalisation préférés mettant en oeuvre des boîtiers récepteurs portatifs destinés à l'affichage de temps d'attente d'autobus, ces boîtiers peuvent être utilisés par eux-mêmes pour constituer les titres de transport permettant les paiements relatifs aux trajets d'autobus successifs effectués par les usagers sur le réseau.

Il peut être très avantageux de combiner les caractéristiques décrites ci-dessus, concernant les abonnements des usagers pour le paiement de leurs transports successifs, aux caractéristiques concernant l'abonnement desdits usagers au service d'information qui se traduit par l'affichage, sur chaque boîtier, de temps d'attente d'autobus.

Les abonnements relatifs à ces deux services peuvent en effet être combinés de façon telle que l'usager n'ait à effectuer qu'un seul paiement pour les deux.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où le "ticket" de transport ici considéré, qui n'est valide que provisoirement et qui peut être revalidé à distance en fin de validation, ne serait pas associé à un boîtier récepteur portatif se prêtant à l'affichage de temps d'attente d'autobus,
- celles où le réseau de transport considéré ne serait pas un réseau d'autobus, ni de transport en commun, mais un réseau d'autoroutes, les tickets rechargeables à distance selon l'invention permettant alors à leurs détenteurs d'acquitter les péages d'accès aux autoroutes de ce réseau,
- et celles où chaque ticket serait équipé de moyens permettant de réserver son usage à des porteurs habilités, moyens comportant par exemple quelques touches associées à des circuits appropriés et permettant d'asservir ledit usage à la composition, à l'aide desdites touches, d'un code secret prédéterminé.

## Revendications

1. Installation destinée à faire acquitter par les usagers d'un réseau de transport les sommes correspondant aux déplacements effectués par ces usagers à bord de véhicules circulant sur ce réseau, comprenant d'une part, des tickets de transport (1) mis à la disposition des usagers moyennant paiement, chacun de ces tickets comprenant des moyens pour enregistrer sur lui une donnée de validité quantifiable ou équivalente correspondant au paiement effectué, et des moyens rendant possibles, en réponse à des signaux transmis à distance, des réductions successives de la donnée de validité, si elle est quantifiable, jusqu'à son annulation, ou des consultations de ladite donnée et, d'autre part, au moins un composteur (9) disposé à proximité d'un passage livrant accès au réseau, composteur comprenant des moyens capables, en réponse à la présentation, par un usager, d'un desdits tickets destiné à autoriser un parcours donné sur le réseau, de contrôler à distance l'état de la validité dudit ticket et de soustraire à distance de la donnée de validité enregistrée dans ce ticket, si elle est quantifiable, une quantité correspondant au parcours considéré, caractérisé en ce qu'elle comprend en outre, sur chaque ticket, des moyens codés d'identification de ce ticket et des moyens codés se prêtant à une recharge de validation à distance dudit ticket en réponse à la réception de signaux électromagnétiques appropriés, et en un poste central (2), des moyens propres à émettre vers les tickets à recharger des signaux électromagnétiques (S) élaborés de façon telle qu'ils soient automatiquement sélectionnables par ces tickets et susceptibles d'effectuer à distance les recharges de validation desdits tickets.

2. Installation selon la revendication 1, appliquée à un réseau d'autobus, comprenant d'une part, des boîtiers portatifs (1) récepteurs de signaux électromagnétiques (S) et agencés de façon à afficher des temps d'attente d'autobus à emprunter et, d'autre part, un poste central (2) propre à élaborer et à émettre vers les boîtiers des signaux électromagnétiques porteurs de données relatives auxdits temps d'attente, caractérisée en ce que les tickets rechargeables sont constitués par lesdits boîtiers eux-mêmes.

3. Installation selon la revendication 1, caractérisée en ce qu'elle est appliquée aux péages d'un réseau d'autoroutes.

4. Installation selon l'une quelconque des précédentes revendications, caractérisée en ce que chaque ticket comporte des moyens à touches permettant d'asservir son usage à la composition, par son usager, d'un code secret.

## Patentansprüche

1. Anlage zum Entrichten von Beträgen durch die Benutzer eines Verkehrsnetzes, wobei diese Beträge den durch diese Benutzer an Bord von in diesem Netz verkehrenden Fahrzeugen durchgeführten Fahrten entsprechen, umfassend einerseits Tickets (1), welche gegen Bezahlung den Benutzern zur Verfügung gestellt sind, wobei jedes dieser Tickets Mittel zum Speichern einer quantifizierbaren Gültigkeitsangabe oder dergleichen auf ihm aufweist, welche der durchgeführten Zahlung entspricht, sowie Mittel aufweist, die - bis zu seiner Ungültigkeitserklärung - in Antwort auf aus der Entfernung übertragene Signale aufeinanderfolgende Herabsetzungen der Gültigkeitsangabe, wenn sie quantifizierbar ist, oder Abfragen der Angaben ermöglichen, und andererseits wenigstens einen in der Nähe eines zum Netz Zugang gebenden Durchgangs angeordneten Entwerter (9), wobei der Entwerter Mittel umfaßt, welche in Antwort auf das Vorweisen eines zum Gestatten einer vorgegebenen Fahrt im Netz bestimmten Tickets durch einen Benutzer aus der Entfernung den Gültigkeitszustand des Tickets zu kontrollieren und aus der Entfernung von der in diesem Ticket gespeicherten Gültigkeitsangabe, wenn sie quantifizierbar ist, eine der betrachteten Fahrt entsprechende Quantität abzuziehen vermögen, dadurch gekennzeichnet, daß sie ferner auf jedem Ticket kodierte Mittel zur Identifikation dieses Tickets sowie kodierte Mittel umfaßt, welche sich für eine Nachladung der Gültigkeit des Tickets aus der Entfernung in Antwort auf den Empfang passender elektromagnetischer Signale eignen, und an einer Zentralstelle (2) Mittel umfaßt, welche dazu geeignet sind, zu den nachzuladenden Tickets elektromagnetische Signale (S) zu senden, welche derart ausgebildet sind, daß sie durch diese Tickets automatisch auswählbar sind und geeignet sind, aus der Entfernung die Gültigkeitsnachladungen der Tickets zu bewirken.

2. Anlage nach Anspruch 1, welche bei einem Autobusnetz verwendet ist, umfassend einerseits tragbare Geräte (1) zum Empfangen von elektromagnetischen Signalen (S), und welche dazu ausgelegt sind, Wartezeiten für zu benutzende Autobusse anzuzeigen, und andererseits eine Zentralstelle (2), welche geeignet ist, Angaben über die Wartezeiten tragende elektromagnetische Signale zu bilden und zu den Geräten zu senden, dadurch gekennzeichnet, daß die nachladbaren Tickets durch die Geräte selbst gebildet sind.

3. Anlage nach Anspruch 1, dadurch gekennzeichnet, daß sie für Zahlstellen eines Autostraßennetzes eingesetzt ist.

4. Anlage nach einem der vorhergehenden Ansprüche, dadurch gekennzeichnet, daß jedes Ticket Tastenmittel umfaßt, welche es erlauben, seine Benutzung von der Eingabe eines geheimen Codes durch seinen Benutzer abhängig zu machen.

## Claims

1. An installation for enabling users of a transport network to pay sums corresponding to trips performed by the users on board vehicles travelling over the network, the installation comprising firstly travel tickets (1) made available to users in return for payment, each of the tickets including means for recording thereon quantifiable validity data or the equivalent corresponding to the payment made, and means responsive to remotely transmitted signals making it possible to implement successive reductions in the validity data, if quantifiable, until it has been reduced to zero, or else to consult said data; and also at least one ticket-stamper (9) located close to a passage giving access to the network, which ticket-stamper includes means responsive to presentation by a user of one of said tickets for authorizing a given trip over tne network, for remotely checking the validity state of said ticket and for remotely subtracting a quantity corresponding to the trip in question from the validity data recorded in the ticket, if said data is quantifiable, the installation being characterized in that it further comprises, on each ticket, coded identification means for said ticket and coded means lending themselves to renewing validity data remotely into said ticket in response to receiving suitable electromagnetic signals, and, at a central station (2), means suitable for transmitting electromagnetic signals (S) to the tickets to be renewed, which signals are generated in such a manner as to enable them to be automatically selectable by said tickets and being suitable for remotely renewing the validity data in said tickets.

2. An installation according to claim 1, applicable to a bus network, comprising firstly portable appliances (1) for receiving electromagnetic signals (S) and organized so as to display waiting times for a bus to be caught, and secondly a central station (2) suitable for generating and transmitting to the appliances electromagnetic signals that convey data relating to said waiting times, the installation being characterized in that the renewable tickets are constituted by the said appliances themselves.

3. An installation according to claim 1, characterized in that it is applied to paying tolls for a motorway network.

4. An installation according to any one of the preceding claims, characterized in that each ticket includes key means enabling use of the ticket during ticket-stamping to be subject to the user keying in a secret code.
